# EUROPEAN PATENT APPLICATION

(11) **EP 4 681 841 A1**
(43) Date of publication of application: **21.01.2026**
(21) Application number: 24770435.6
(22) Date of filing: 20.02.2024
(51) Int. Cl.: B22D 17/20, B29C 45/62

(54) **INJECTION CYLINDER, INJECTION MOLDING MACHINE PROVIDED THEREWITH, AND COMPONENTS OF SPLIT-TYPE INJECTION CYLINDER**

(30) Priority: 14.03.2023 JP 2023039607
(71) Applicant: The Japan Steel Works, Ltd., Tokyo 141-0032 (JP)
(72) Inventor: YAMAGUCHI Takeshi, Tokyo 141-0032 (JP); BUTANI Michio, Tokyo 141-0032 (JP); KAWABE Chikara, Tokyo 141-0032 (JP); NAKAGAWA Yutaka, Tokyo 141-0032 (JP)
(74) Representative: Simmons & Simmons LLP (Munich)
(86) International application number: PCT/JP2024/006059
(87) International publication number: WO 2024/190322

(57) **Abstract**

An injection cylinder 31 of this injection molding machine comprises: a cylinder body 32; a screw 33 which is accommodated in the cylinder body 32 and has a screw head 37 at the tip-end thereof; and a backflow prevention unit 5 which is accommodated in the cylinder body 32 to prevent backflow of molten metal to be injected. The screw 33 and the backflow prevention unit 5 are capable of relative displacement with respect to the cylinder body 32 in a material injection direction X. The cylinder body 32 has a movable section K1 where the screw head 37 and the backflow prevention unit 5 are capable of relative displacement with respect to the cylinder body 32. An internal diameter D1 in the movable section K1 of the cylinder body 32 is larger than an internal diameter D2 at the rear end of the cylinder body 32 in the material injection direction X.

## Description

### Technical Field

This application claims the benefit of Japanese Priority Patent Application No. JP 2023-39607 filed on March 14, 2023, the entire contents of which are incorporated herein by reference.

The present invention relates to an injection cylinder, an injection molding machine provided with same, and components of a split injection cylinder.

### Background Art

An injection molding machine generally comprises an injection cylinder that houses a screw. An example of an injection cylinder is disclosed in Japanese Patent Application Laid-Open No. 2019-063833. The inner diameter of a cylinder body that houses the screw is constant in the axial direction.

### Summary of Invention

In recent years, the trend towards larger molded products has led to a demand for increased injection capacity per molding cycle. Since the front part of an injection cylinder generally comprises a measurement section, increasing the capacity of the measurement section has been considered as a means of increasing the injection capacity. One way to achieve such an increase is to increase the inside diameter of the cylinder body along its entire length. However, this method may lead to a larger injection cylinder and thus may increase the size of injection molding machine.

The purpose of the present disclosure is to provide an injection cylinder for an injection molding machine that enables an increase in the injection capacity while preventing an increase in the size of the injection cylinder.

The cylinder body according to the present disclosure includes a movable area in which a screw head and a backflow prevention section are displaceable relative to the cylinder body, and in which the inner diameter of the cylinder body in the movable area is larger than the inner diameter at the rear end of the cylinder body in the injection direction.

According to the present disclosure, an injection cylinder can be provided for an injection molding machine that enables an increase in the injection capacity while preventing an increase in the size of the injection cylinder.

The objects, features, and advantages of the present application, above and otherwise, will become apparent from the detailed description set forth below with reference to the accompanying drawings, that illustrate the present application.

### Brief Description of the Drawings

[Fig. 1] Fig. 1 is a schematic front view of an injection molding machine according to a first embodiment.
[Fig. 2] Fig. 2 is an enlarged view of a front part of the injection cylinder shown in Fig. 1.
[Fig. 3] Fig. 3 is a diagram showing the positional relationship between a screw and a backflow prevention section of the injection cylinder shown in Fig. 1.
[Fig. 4] Fig. 4 is an enlarged view of a front part of the injection cylinder in a modification.
[Fig. 5] Fig. 5 is an enlarged view of a front part of an injection cylinder in a comparative example.
[Fig. 6] Fig. 6 is a diagram showing one molding cycle.
[Fig. 7] Fig. 7 is an enlarged view of a front part of the injection cylinder of a second embodiment.
[Fig. 8] Fig. 8 is a schematic front view of the injection molding machine of a third embodiment.
[Fig. 9] Fig. 9 is an enlarged view of a front part of the injection cylinder of a fourth embodiment.

### Detailed Description of Embodiments

### First Embodiment

Injection molding machine 1 of the first embodiment of the present invention will next be described with reference to the drawings. In the following description, the axial direction or direction of movement of screw 33 is referred to as the X-direction. Terms such as "frontward" and "front" refer to movement, direction, position, etc. of screw 33 that approach mold-clamping unit 2 in the X-direction, and terms such as "rearward" and "rear" refer to movement, direction, position, etc. of screw 33 away from mold-clamping unit 2 in the X-direction. The injection direction X indicates frontward in the X-direction.

### Overall Configuration

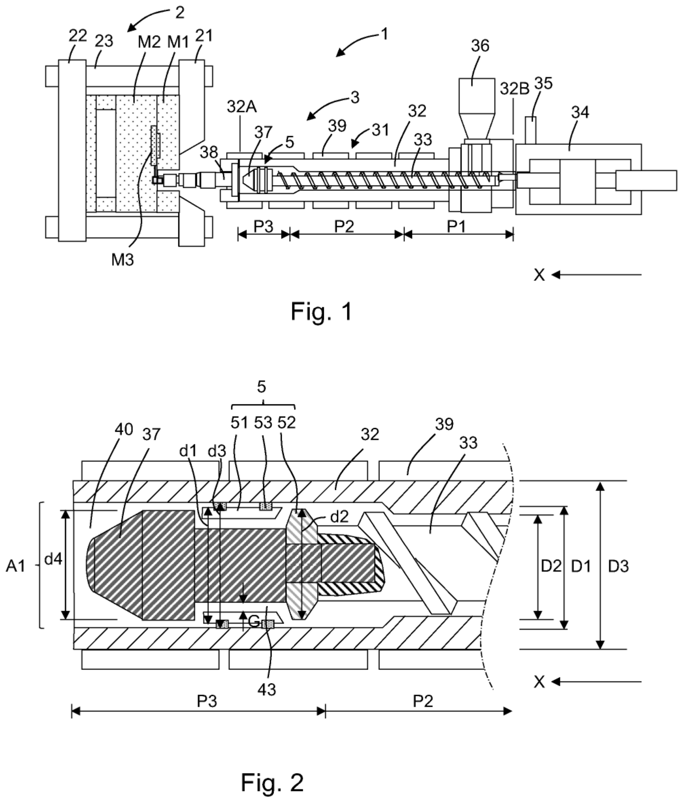

Fig. 1 shows a schematic front view of the first embodiment of injection molding machine 1. Injection molding machine 1 is a horizontal metal injection molding machine that injects molten metals such as magnesium alloy and aluminum alloy. Injection molding machine 1 roughly comprises mold-clamping unit 2 that clamps the mold, and injection unit 3 that heats, melts, and injects the metal material to be injected. The metal material that is heated and melted for injection is sometimes referred to as a molten metal. The metal material may be injected in a semi-molten state or in a fully molten state. The present invention is not limited to a metal injection molding machine but can also be applied to a resin injection molding machine.

### Mold-Clamping Unit 2

Mold-clamping unit 2 comprises fixed platen 21 that is fixed to a bed (not shown) and on which fixed mold M1 is mounted and movable platen 22 that can slide on the bed and on which movable mold M2 is mounted. A mold-clamping housing (not shown) that can slide on the bed is provided on the opposite side of movable platen 22 from fixed platen 21, and fixed platen 21 and the mold-clamping housing are connected by a plurality of tie bars 23. A hydraulic mold-clamping cylinder (not shown) is provided between movable platen 22 and the mold-clamping housing for opening and closing the mold. Instead of the hydraulic mold-clamping cylinder, a link mechanism (not shown) that is driven by an electric ball screw may also be provided. Cavity M3 into which the molten metal is injected is formed between fixed mold M1 and movable mold M2.

### Injection Unit 3

Injection unit 3 is provided on a base (not shown). Injection unit 3 comprises injection cylinder 31. Injection cylinder 31 comprises cylinder body 32 that is a hollow cylinder and screw 33 that is housed in cylinder body 32. The inner space of cylinder body 32 has a circular cross section perpendicular to the X-direction. Injection unit 3 further comprises drive mechanism 34 that drives screw 33 and control unit 35 for drive mechanism 34. Screw 33 is both rotated and driven (frontward and rearward) in the X-direction by drive mechanism 34.

Injection cylinder 31 is generally divided from rear to front into supply section P1, compression section P2, and measurement section P3. Supply section P1 is provided with hopper 36 into which pellet-shaped metal material is supplied. The metal material is conveyed to compression section P2 while receiving residual heat from heaters 39 that are wrapped around the circumference of cylinder body 32. The metal material is compressed, heated, and kneaded in compression section P2 to a molten state, and then transferred to measurement section P3. Measurement section P3 measures the amount of molten metal to be injected in one injection cycle (shot).

Screw 33 has screw head 37 at its front end in the X-direction. Injection nozzle 38 that supplies molten metal into cavity M3 is attached to the end of injection cylinder 31. Heaters 39 that heat and melt the metal material are provided around the circumference of cylinder body 32.

### Backflow Prevention Section 5

Fig. 2 shows an enlarged view of the front part of injection cylinder 31. Measurement section P3 of injection cylinder 31 comprises backflow prevention section 5 that prevents backflow of the metal material to be injected. Backflow prevention section 5 comprises backflow prevention ring 51, push plate 52, and piston rings 53. Backflow prevention ring 51 is a hollow cylindrical member that is located rearward of screw head 37 with respect to the injection direction X. Piston rings 53 are circular sealing components fitted on the outer circumference of backflow prevention ring 51 and divide backflow prevention ring 51 into frontward and rearward positions. Push plate 52 is fixed to screw 33. Push plate 52 is a perforated disc that is located rearward of backflow prevention ring 51 with respect to the injection direction X. Push plate 52 restricts the rearward movement of backflow prevention ring 51.

Backflow prevention ring 51 is interposed between screw head 37 and push plate 52 on screw 33. The outer diameters of screw head 37 and push plate 52 are larger than the inner diameter of backflow prevention ring 51, and the length of backflow prevention ring 51 in the X-direction is smaller than the distance separating screw head 37 and push plate 52 in the X-direction. Therefore, backflow prevention ring 51 can move in the X-direction while being confined by screw head 37 and push plate 52.

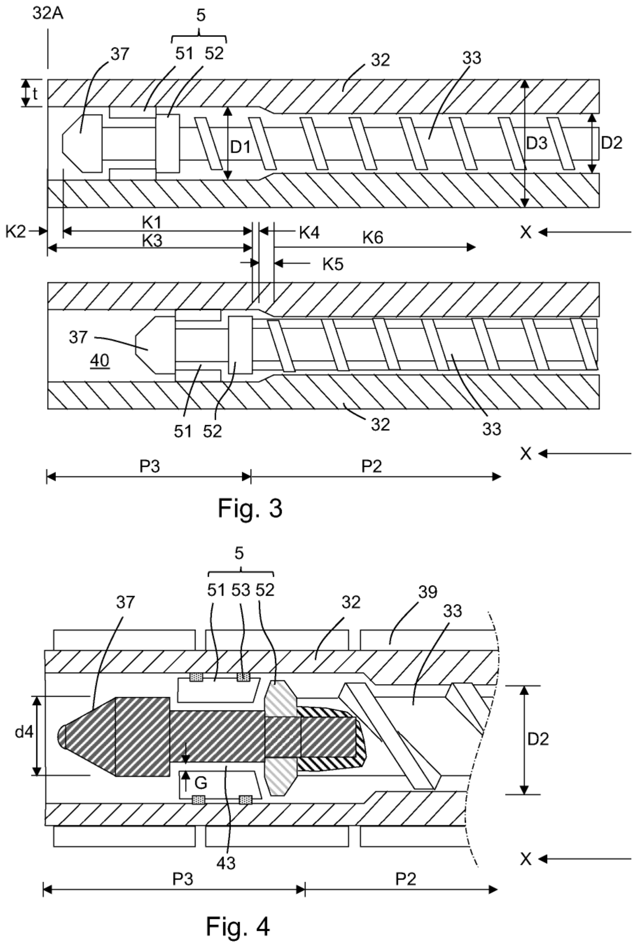

Fig. 3 shows the positional relationship between screw 33 and cylinder body 32 of backflow prevention section 5 (piston rings 53 are not shown). As shown in the top view of Fig. 3, when the molten metal is injected, screw 33 moves frontward and backflow prevention ring 51 moves rearward relative to screw 33. Backflow prevention ring 51 collides with push plate 52 and prevents molten metal that has been measured in front of screw 33 from leaking rearward during injection (when screw 33 moves frontward). As shown in the lower view of Fig. 3, when the amount of molten metal is to be measured, screw 33 moves rearward and backflow prevention ring 51 moves frontward relative to screw 33. Backflow prevention ring 51 collides with screw head 37, but the molten metal to the rear of push plate 52 passes along a flow path (not shown) and is supplied to front space 40 of screw head 37. Thus, backflow prevention ring 51 functions as a type of valve.

### Shape of Cylinder Body 32

Therefore, screw head 37 and backflow prevention section 5 move relative to cylinder body 32 in the X-direction in a specific area. This area of cylinder body 32 is referred to as movable area K1 of screw head 37 and backflow prevention section 5. Front area K2 into which screw head 37 does not enter, is provided between movable area K1 and front end 32A of cylinder body 32. The combination of movable area K1 and front area K2 is referred to as extended movable area K3. The inner diameter D1 is constant in the extended movable area K3 of cylinder body 32.

Back area K4 in which the inner diameter of cylinder body 32 is the same as in movable area K1 connects to the rear end of movable area K1. The rear end of back area K4 connects to transition area K5 in which the inner diameter of cylinder body 32 gradually decreases rearward in the X-direction. Normal area K6 having a constant inner diameter D2 of cylinder body 32 connects to the rear end of transition area K5.

Thus, in the present embodiment, the inner diameter of cylinder body 32 is larger in extended movable area K3 than in the other areas. In other words, the inner diameter of cylinder body 32 is enlarged in movable area K1 and preferably in extended movable area K3 than in normal area K6. Accordingly, the inner diameter D1 of cylinder body 32 in movable area K1 is larger than the inner diameter D2 of cylinder body 32 at least at rear end 32B. On the other hand, the outer diameter D3 of cylinder body 32 is constant in the area from front end 32A to rear end 32B. In other words, cylinder body 32 has wall thickness t that is thinner in movable area K1 and preferably in extended movable area K3 than in normal area K6.

Back area K4 may be omitted, and transition area K5 may connect to the rear end of movable area K1. Similarly, transition area K5 may be omitted, and the inner diameter of cylinder body 32 in back area K4 and normal area K6 may change discontinuously. Alternatively, back area K4 and transition area K5 may be omitted, and the inner diameter of cylinder body 32 of movable area K1 and normal area K6 may change discontinuously.

### Dimensions of Backflow Prevention Section 5

Referring to Fig. 2, outer diameter d1 of backflow prevention ring 51, outer diameter d2 of push plate 52, and outer diameter d3 of piston rings 53 are larger than inner diameter D2 of cylinder body 32 in normal area K6 or at rear end 32B. Outer diameter d4 of screw head 37 is also larger than inner diameter D2 of cylinder body 32 in normal area K6 and at rear end 32B. Outer diameter d4 of screw head 37 need not be enlarged to match inner diameter D1 of measurement section P3 of cylinder body 32.

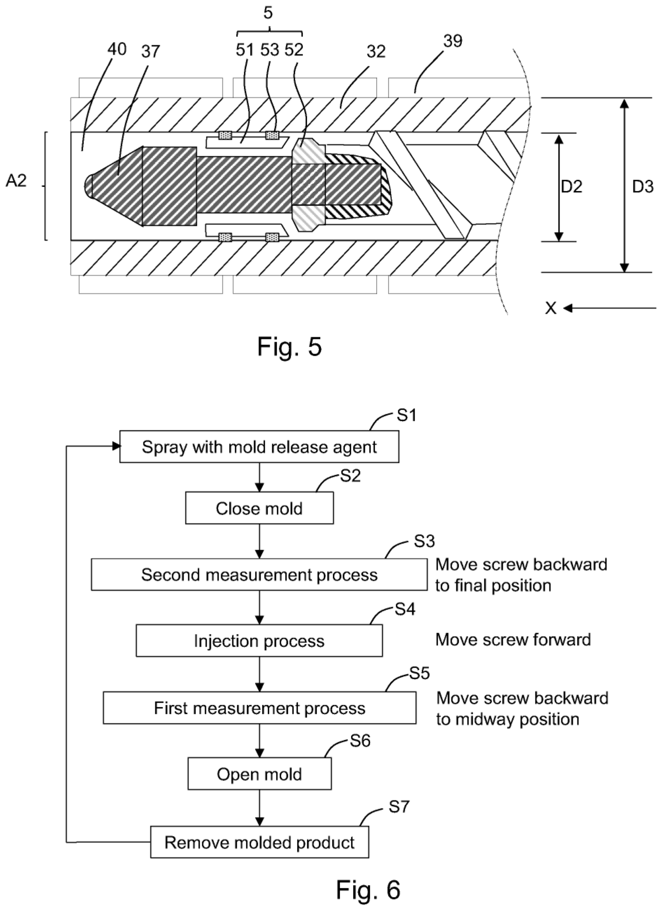

Making outer diameter d4 of screw head 37 larger than inner diameter D2 of cylinder body 32 in normal area K6 or at rear end 32B obtains advantages as next described. Fig. 4 shows an enlarged view of the front part of injection cylinder 31 in a modification of the present embodiment. Outer diameter d4 of screw head 37 is smaller than inner diameter D2 of cylinder body 32 in normal area K6 or at rear end 32B and is the same as outer diameter d4 of screw head 37 in a comparative example (see Fig. 5) to be described below.

Referring to Figs. 2 and 4, the radial thickness of backflow prevention ring 51 in the modification needs to be made larger than in the present embodiment in order that backflow prevention ring 51 will come into contact with screw head 37. As a result, the diameter of the center line of annular flow passage 43 between screw head 37 and backflow prevention ring 51 is larger in the present embodiment than in the modification. If gap G between screw head 37 and backflow prevention ring 51 is the same, the cross-sectional area of flow passage 43 will also be larger in the present embodiment than in the modification. Therefore, the feed efficiency (flow rate) of the molten metal in the measurement process is increased, and the larger front space 40 can be filled with a sufficient amount of molten metal. Although outer diameter d4 of screw head 37 should be larger than inner diameter D2 of cylinder body 32, no particular limitations apply to other shapes and dimensions of screw head 37.

The configuration of backflow prevention section 5 is not limited to the configuration described above. Configurations using a ball check valve or a mechanical valve are also applicable. Even when these backflow prevention parts are used, the outer diameter of cylinder body 32 should be increased together with inner diameter D1 of measurement section P3.

### Advantages of the Present Embodiment

Expanding inner diameter D1 of measurement section P3 of cylinder body 32 in this manner enables an increase of the amount of molten metal to be measured and the amount of molten metal that can be injected in one injection cycle. Therefore, injection molding machine 1 of the present embodiment enables the production of large-sized molded products. This point will be explained more specifically in comparison with the comparative example. Fig. 5 shows an enlarged view of the front part of injection cylinder 31 (see Fig. 1) of the comparative example. Inner diameter D2 and outer diameter D3 of cylinder body 32 are the same as in normal area K6 of injection cylinder 31 of the first embodiment. In other words, the cross-sectional area A2 of front space 40 is smaller than the cross-sectional area A1 of the present embodiment (see Fig. 2).

Table 1 shows a comparison of the injection capacity and injection rate (the amount of metal material injected from injection nozzle 38 per unit time) of a working example and the comparative example. The injection rate is determined by S x V, which is the product of cross-sectional area S of front space 40 and the injection velocity V of the molten metal. The injection stroke and injection velocity were the same in the working example and the comparative example. Therefore, a larger cross-sectional area S increases the injection rate. The working example has the same configuration as the first embodiment, with the inner diameter of extended movable area K3 and back area K4 increased from 100 mm to 110 mm in the comparative example. In the working example, the injection capacity was increased by about 21% and the injection rate was increased by about 20% compared to the comparative example. Thus, since the cross-sectional area A1 in the present embodiment is larger than the cross-sectional area A2 of the comparative example, a larger amount of metal material can be injected.

**Table 1**

| Item | Unit | Working example | Comparative example |
|---|---|---|---|
| Inner diameter of front space of screw head | mm | 100 | 110 |
| Injection stroke | mm | 220 | 220 |
| Injection velocity | m/s | 4.5 | 4.5 |
| Injection capacity | cm³ | 1728 | 2091 |
| Injection rate | cm³/s | 35343 | 42765 |

If the thickness of cylinder body 32 of the existing injection molding machine shown in Fig. 5 is sufficient, the inner surface of cylinder body 32 can be cut and processed into the shape of the present embodiment. In this case, the components of injection cylinder 31 to be replaced include screw head 37, backflow prevention section 5, piston rings 53, and push plate 52.

To increase the amount of molten metal injected in one molding cycle, uniformly increasing the overall inner diameter of injection cylinder 31 can be considered. However, this method would increase the size of injection cylinder 31 and thus the size of injection molding machine 1, and therefore, may lead to increased costs. In the present embodiment, the amount of molten metal to be injected can be increased without changing the outer shape of injection cylinder 31.

The mold-clamping force is determined by the ability of the mold-clamping cylinder and is independent of the size and shape of injection cylinder 31. As a result, maintaining the internal pressure applied to cavity M3 of the mold while increasing the size of the mold will decrese the mold-clamping pressure generated at the parting line between movable mold M2 and fixed mold M1, and thus increase the likelihood of burring of the molded product. On the other hand, since the pushing force of injection cylinder 31 is the same in the present embodiment and the comparative example, the pressure in front space 40 in the present embodiment, in which the cross-sectional area A1 is larger, will decrese and thus result in lower injection pressure. Therefore, the internal pressure of cavity M3 of the mold will also be reduced and the occurrence of burrs less likely. In other words, from the viewpoint of reducing burr generation, the present embodiment also facilitates achieving a larger molded product compared to a configuration in which the overall inner diameter of injection cylinder 31 is uniformly increased.

### Control of Molding Cycle

In the following explanation of the control of the molding cycle, Figs. 2 and 3 will also be referred to as appropriate. Increasing the amount of molten metal injected in one molding cycle necessitates verification that the molten metal produced in compressed section P2 is supplied into front space 40 of screw head 37 in exactly the amount. For this reason, control unit 35 of injection molding machine 1 of the present embodiment is able to control drive mechanism 34 such that in each molding cycle, the process of moving screw 33 backward in the measurement process is divided into two separate steps.

Fig. 6 shows the main steps of one molding cycle. After the molded product from the previous cycle has been removed (step S7), the mold is sprayed with mold release agent (step S1) for the next molding cycle and the mold is closed (step S2). At this point, screw 33 is first moved backward to execute the measurement process (step S3) and screw 33 is then moved frontward to execute the injection process (step S4). When the injection process is completed, screw 33 is again moved backward to execute the measurement process (step S5). When cooling of the molded product is completed, the mold is opened (step S6) and the molded product is removed (step S7).

In other words, when taking injection as baseline, the first measurement process for injection of the next cycle is executed immediately after the injection process (first measurement in step S5), and the second measurement process is executed immediately before the injection process of the next cycle (second measurement in step S3).

The measurement process is usually executed after completion of the post-injection pressure holding process (not shown). Normally, the required amount of molten metal can be supplied to front space 40 of screw head 37 in a single measurement process. However, since the amount of molten metal for the injection is increased in the present embodiment, it may not be possible to supply the required amount of molten metal in only one measurement process. Metal in an insufficiently molten state has a large volume per unit weight. Therefore, if metal in this state is supplied to compression section P2, the drive torque of screw 33 may increase, screw 33 may stop, and measurement may become inconsistent.

Therefore, in the first measurement process, screw 33 is moved rearward to a midway position for partial measurement, and in the second measurement process, screw 33 is moved rearward to a final position, i.e., the position corresponding to the injection capacity. In this way, the amount of molten metal supplied in the first measurement process is reduced, and the possibility of insufficient supply of molten metal that is fully molten is also reduced. In addition, the passage of a certain amount of time between the first and second measurement processes also allows new molten metal to be supplied.

The ratio of the amount of molten metal supplied in the first and second weighing processes or the ratio of distance in which screw 33 is moved backward can be set according to the molten metal supply capacity or the time difference between the first and second measurement processes. The process of moving screw 33 backward in each molding cycle is not limited to two times and can be performed three or more times.

### Second Embodiment

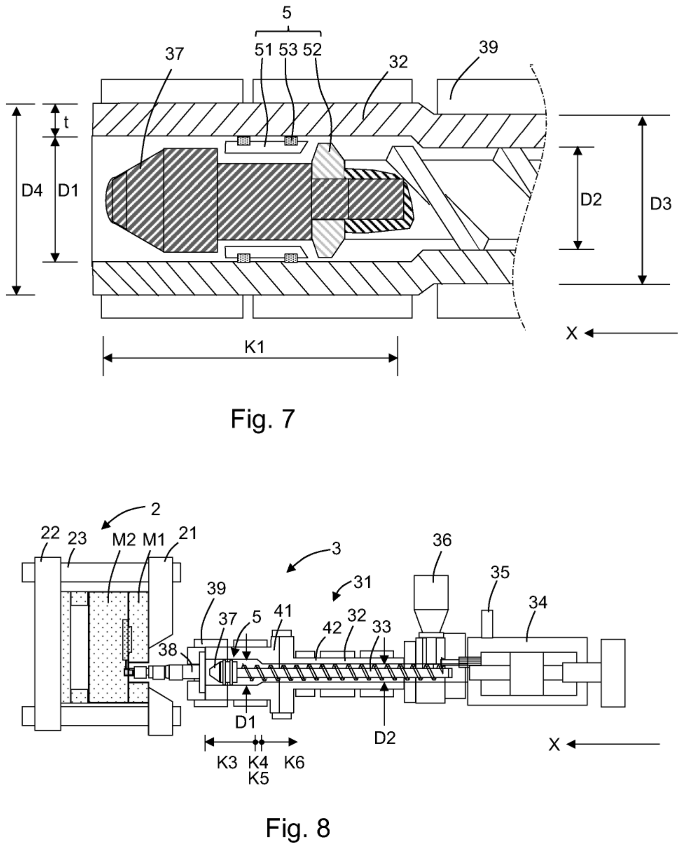

Fig. 7 shows an enlarged view of the front part of injection cylinder 31 of a second embodiment. Configuration and effects omitted from this explanation are equivalent to those of the first embodiment. Outer diameter D4 of cylinder body 32 in movable area K1 is larger than outer diameter D3 of cylinder body 32 in normal area K6 or rear end 32B. In other words, in the present embodiment, outer diameter D4 is increased as inner diameter D1 of cylinder body 32 is increased in movable area K1. Wall thickness t of cylinder body 32 may be constant in the X-direction but may differ between movable area K1 and normal area K6. Because the internal pressure of cylinder body 32 in movable area K1 is generally higher than that in normal area K6, the wall thickness of cylinder body 32 in movable area K1 can also be made larger than that of cylinder body 32 in normal area K6.

### Third Embodiment

Fig. 8 shows a schematic front view of a third embodiment of injection molding machine 1. Configuration and effects omitted from this explanation are equivalent to those of the first embodiment. Injection cylinder 31 of the present embodiment is a split injection cylinder. Cylinder body 32 includes front part 41 that is located frontward in the injection direction X and rear part 42 that is located rearward in the injection direction X. Front part 41 and rear part 42 are independent of each other. Since the inner surface of cylinder body 32 tends to be abraded by the sliding of piston rings 53 of backflow prevention ring 51, use of the split configuration allows replacement of only front part 41.

Extended movable area K3, back area K4, and transition area K5 are included in front part 41, and part of normal area K6 is also included in front part 41. Rear part 42 includes only normal area K6. Inner diameter D1 of front part 41 is larger than inner diameter D2 of rear part 42. According to this configuration, the same effect is achieved as in the first embodiment. The present embodiment is particularly advantageous for modifying existing injection cylinders. If an existing injection cylinder is of the split configuration, the front part alone can be replaced with front part 41 of the present embodiment. The component parts of split injection cylinder 31 to be replaced include front part 41 of cylinder body 32, screw head 37, backflow prevention section 5, piston rings 53, and push plate 52.

### Fourth Embodiment

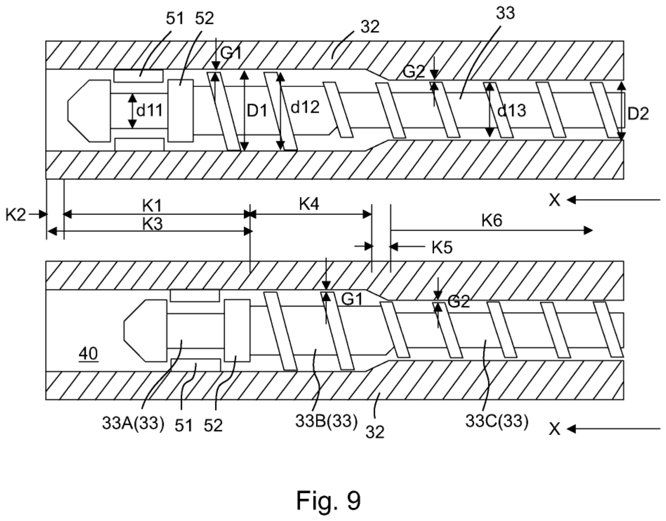

Fig. 9 is a diagram similar to Fig. 3 showing an enlarged view of the front part of injection cylinder 31 of a fourth embodiment. The diameter of screw 33 is expanded rearward of backflow prevention section 5. In other words, screw 33 comprises screw head 33A, expanded-diameter part 33B, and reduced-diameter part 33C. Expanded-diameter part 33B is located rearward of screw head 33A with respect to the injection direction X and has outer diameter d12 larger than outer diameter d11 of the part of screw head 33A that confronts backflow prevention ring 51. Reduced-diameter part 33C is located rearward of expanded-diameter part 33B in the injection direction X and has an outer diameter d13 that is larger than outer diameter d11 and smaller than outer diameter d12 of expanded-diameter part 33B.

Because the diameter of screw 33 is constant in the first embodiment, the radial gap between cylinder body 32 and screw 33 tends to increase rearward of backflow prevention section 5. Expanding the diameter rearward of backflow prevention section 5 in the present embodiment reduces the difference between gap G1 in back area K4 and gap G2 in normal area K6, and the molten metal therefore flows more smoothly.

While some preferred embodiments of the invention have been shown and described in detail, it is to be understood that various changes and modifications are possible without departing from the intent or scope of the appended claims.

### Reference Number List

- 1: injection molding machine
- 5: backflow prevention section
- 31: injection cylinder
- 32: cylinder body
- 33: screw
- 33A: end part
- 33B: expanded-diameter part
- 33C: reduced-diameter part
- 34: drive mechanism
- 35: control unit
- 37: screw head
- 41: front part
- 42: rear part
- 51: backflow prevention ring
- 52: push plate

## Claims

1. An injection cylinder of an injection molding machine, comprising:
a cylinder body;
a screw that is housed in said cylinder body and that has a screw head at one end;
a backflow prevention section that is housed in said cylinder body and that prevents backflow of a material to be injected, wherein:
said screw and said backflow prevention section are displaceable relative to said cylinder body in an injection direction of said material;
said cylinder body includes a movable area in which said screw head and said backflow prevention section are displaceable relative to said cylinder body; and
the inner diameter of said cylinder body in said movable area is larger than the inner diameter of said cylinder body at a rear end in said injection direction.

2. The injection cylinder according to claim 1, wherein
said backflow prevention section comprises a backflow prevention ring that is located rearward of said screw head with respect to said injection direction, and a push plate that is located rearward of said backflow prevention ring with respect to said injection direction and that restricts rearward movement of said backflow prevention ring, wherein
the outer diameters of said backflow prevention ring and said push plate are larger than the inner diameter at said rear end of said cylinder body.

3. The injection cylinder according to claim 1 or 2, wherein the outer diameter of said screw head is larger than the inner diameter at said rear end of said cylinder body.

4. The injection cylinder according to any one of claims 1 to 3, wherein the outer diameter of said cylinder body is constant in an area from a front end to said rear end of said cylinder body.

5. The injection cylinder according to any one of claims 1 to 3, wherein the outer diameter of said cylinder body in said movable area is larger than the outer diameter at said rear end of said cylinder body.

6. The injection cylinder according to any one of claims 1 to 5, wherein said cylinder body comprises a front part that is located frontward in said injection direction and that includes said movable area, and a rear part that is located rearward in said injection direction and that is configured as an independent member from said front part.

7. The injection cylinder according to any one of claims 1 to 6, wherein
said screw comprises:
an end part to which said screw head is attached and that confronts said backflow prevention section;
an expanded-diameter part that is located rearward of said end part in said injection direction and that has a larger outer diameter than said end part; and
a reduced-diameter part that is located rearward of said expanded-diameter part with respect to said injection direction and that has a smaller outer diameter than said expanded-diameter part.

8. An injection molding machine comprising the injection cylinder according to any one of claims 1 to 7.

9. The injection molding machine according to claim 8, wherein said injection molding machine is a metal injection molding machine.

10. The injection molding machine according to claim 8 or 9, further comprising:
a drive mechanism that causes said screw to move back and forth in an axial direction of said screw; and
a control unit for said drive mechanism, wherein
said control unit controls said drive mechanism such that rearward movement of said screw is divided into a plurality of movement steps in each molding cycle.

11. Components of a split injection cylinder of an injection molding machine, said split injection cylinder comprising:
a cylinder body;
a screw that is housed in said cylinder body and that includes a screw head at one end; and
a backflow prevention section that is housed in said cylinder body and that prevents backflow of a material to be injected, wherein:
said screw and said backflow prevention section are displaceable relative to said cylinder body in an injection direction of said material;
said cylinder body includes a movable area in which said screw head and said backflow prevent section are displaceable relative to said cylinder body, and the inner diameter in said movable area of said cylinder body is larger than the inner diameter at a rear end of said cylinder body in said injection direction;
said cylinder body comprises a front part that is located frontward in said injection direction and that includes said movable area, and a rear part that is located rearward in said injection direction and that is configured as an independent member from said front part; and
said components include said front part of said cylinder body, said screw head, and said backflow prevention section.
